# EUROPEAN PATENT APPLICATION

(11) **EP 4 517 555 A1**
(43) Date of publication of application: **05.03.2025**
(21) Application number: 24201193.0
(22) Date of filing: 18.09.2024
(51) Int. Cl.: G06F 16/334

(54) **METHOD AND APPARATUS OF TRAINING LARGE MODEL-BASED TEXT RETRIEVAL MODEL, METHOD AND APPARATUS OF RETRIEVING TEXT, AND DEVICE**

(30) Priority: 25.04.2024 CN 202410509240
(71) Applicant: Beijing Baidu Netcom Science Technology Co., Ltd., Beijing 100085 (CN)
(72) Inventor: JIN, Song, Beijing, 100085 (CN); ZHENG, Lei, Beijing, 100085 (CN); ZHANG, Jing, Beijing, 100085 (CN); XING, Guoliang, Beijing, 100085 (CN)
(74) Representative: Zimmermann, Tankred Klaus

(57) **Abstract**

A method and an apparatus of training a text retrieval model, a method and an apparatus of retrieving a text, a device, and a medium, relate to a field of artificial intelligence technology, in particular to fields of deep learning, large language model, natural language understanding and retrieval technologies, and apply in application scenarios such as generative search, intelligent document editing, intelligent assistants, virtual characters, etc. The method of training a text retrieval model includes: inputting a sample text to be queried into a first text retrieval model to obtain a first output text mark; and training the first text retrieval model according to a text-mark label of the sample text to be queried and the first output text mark, where the sample text to be queried corresponds to a first target reference text, the text-mark label is a reference text mark of the first target reference text, a plurality of reference text marks are determined according to a reference text sequence, the reference text sequence is determined according to semantics of the plurality of reference texts, and the first text retrieval model is trained using the plurality of reference texts and the plurality of corresponding reference text marks, so as to output a reference text mark corresponding to a reference text.

## Description

### TECHNICAL FIELD

The present disclosure relates to a field of artificial intelligence technology, and in particular to fields of deep learning, large language model, natural language understanding and retrieval technologies. More specifically, the present disclosure provides a method and an apparatus of training a text retrieval model, a method and an apparatus of retrieving a text, an electronic device, and a storage medium.

### BACKGROUND

With a development of artificial intelligence technology, a large language model (LLM) may be used to perform retrieval tasks.

### SUMMARY

The present disclosure provides a method and an apparatus of training a text retrieval model, a method and an apparatus of processing a text, an electronic device, a storage medium, and a program product.

According to an aspect of the present disclosure, a method of training a text retrieval model is provided, including: inputting a sample text to be queried into a first text retrieval model to obtain a first output text mark; and training the first text retrieval model according to a text-mark label of the sample text to be queried and the first output text mark to obtain a target text retrieval model, where the sample text to be queried corresponds to a first target reference text among a plurality of reference texts, the text-mark label is a reference text mark of the first target reference text, a plurality of reference text marks are determined according to a reference text sequence, and the reference text sequence is determined according to semantics of the plurality of reference texts; and where the first text retrieval model is obtained by training an initial text retrieval model using the plurality of reference texts and the plurality of reference text marks corresponding to the plurality of reference texts, so as to output a reference text mark corresponding to a reference text.

According to another aspect of the present disclosure, a method of retrieving a text is provided, including: inputting a text to be queried into a target text retrieval model to obtain a current output result, where the target text retrieval model is obtained by training a first text retrieval model using a sample text to be queried and a text-mark label, the sample text to be queried corresponds to a first target reference text among a plurality of reference texts, and the text-mark label is a reference text mark of the first target reference text; and determining a second target reference text among the plurality of reference texts as a retrieval result corresponding to the text to be queried, in response to a determination that the current output result hits the second target reference text.

According to another aspect of the present disclosure, an apparatus of training a text retrieval model is provided, including: a first obtaining module configured to input a sample text to be queried into a first text retrieval model to obtain a first output text mark; and a training module configured to train the first text retrieval model according to a text-mark label of the sample text to be queried and the first output text mark to obtain a target text retrieval model, where the sample text to be queried corresponds to a first target reference text among a plurality of reference texts, the text-mark label is a reference text mark of the first target reference text, a plurality of reference text marks are determined according to a reference text sequence, and the reference text sequence is determined according to semantics of the plurality of reference texts; and where the first text retrieval model is obtained by training an initial text retrieval model using the plurality of reference texts and the plurality of reference text marks corresponding to the plurality of reference texts, so as to output a reference text mark corresponding to a reference text.

According to another aspect of the present disclosure, an apparatus of retrieving a text is provided, including: a fourth obtaining module configured to input a text to be queried into a target text retrieval model to obtain a current output result, where the target text retrieval model is obtained by training a first text retrieval model using a sample text to be queried and a text-mark label, the sample text to be queried corresponds to a first target reference text among a plurality of reference texts, and the text-mark label is a reference text mark of the first target reference text; and a determination module configured to determine a second target reference text among the plurality of reference texts as a retrieval result corresponding to the text to be queried, in response to a determination that the current output result hits the second target reference text.

According to another aspect of the present disclosure, an electronic device is provided, including: at least one processor; and a memory communicatively connected to the at least one processor, where the memory stores instructions executable by the at least one processor, and the instructions, when executed by the at least one processor, are configured to cause the at least one processor to implement the methods provided according to the present disclosure.

According to another aspect of the present disclosure, a non-transitory computer-readable storage medium having computer instructions therein is provided, where the computer instructions are configured to cause a computer to implement the methods provided according to the present disclosure.

According to another aspect of the present disclosure, a computer program product containing a computer program is provided, where the computer program, when executed by a processor, is configured to cause the processor to implement the methods provided according to the present disclosure.

It should be understood that content described in this section is not intended to identify key or important feature in embodiments of the present disclosure, nor is it intended to limit the scope of the present disclosure. Other feature of the present disclosure will be easily understood through the following description.

### BRIEF DESCRIPTION OF THE DRAWINGS

The accompanying drawings are used for better understanding of the solution and do not constitute a limitation to the present disclosure. In the accompanying drawings:
FIG. 1 shows a flowchart of a method of training a text retrieval model according to an embodiment of the present disclosure;
FIG. 2A shows a schematic diagram of training an initial text retrieval model according to an embodiment of the present disclosure;
FIG. 2B shows a schematic diagram of training a first text retrieval model according to an embodiment of the present disclosure;
FIG. 3 shows a flowchart of a method of retrieving a text according to another embodiment of the present disclosure;
FIG. 4 shows a schematic diagram of a method of retrieving a text according to an embodiment of the present disclosure;
FIG. 5 shows a block diagram of an apparatus of training a text retrieval model according to an embodiment of the present disclosure;
FIG. 6 shows a block diagram of an apparatus of retrieving a text according to another embodiment of the present disclosure; and
FIG. 7 shows a block diagram of an electronic device to which a method of training a text retrieval model and/or a method of retrieving a text may be applied according to an embodiment of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as just exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

With a popularization of laws, policies and other rule texts, users have an increasingly strong demand for consultation on legal articles and policies. Corresponding legal article retrieval systems and policy content retrieval systems are also constantly developing. Taking a legal article retrieval system as an example, the legal article retrieval system may perform accurate or fuzzy retrievals according to partial content of legal articles, or provide the whole text of a law.

However, some legal article retrieval systems are mainly provided for professionals with legal knowledge, such as lawyers. A retrieval system may be used by the professionals to retrieve complete and authoritative legal articles in a case that a particular article of a particular law is known by the professionals. The retrieval system is substantially a database of all laws, which is difficult to assist non-professionals with little or no legal knowledge to retrieve relevant laws.

In addition, the retrieval system may provide a retrieval result based on a semantic similarity between a question and a legal article. However, the retrieval system may provide a good retrieval result when the question is simple or a legal keyword is contained in the question, and it is difficult to explore a fine-grained semantic relationship between the question and the legal article. The retrieval system is difficult to understand a complex question. In a case of complex, vague or unclear questions, it is difficult for the retrieval system to provide a good retrieval result.

Therefore, in order to perform a retrieval based on a complex question, the present disclosure provides a method of training a text retrieval model, which will be described below.

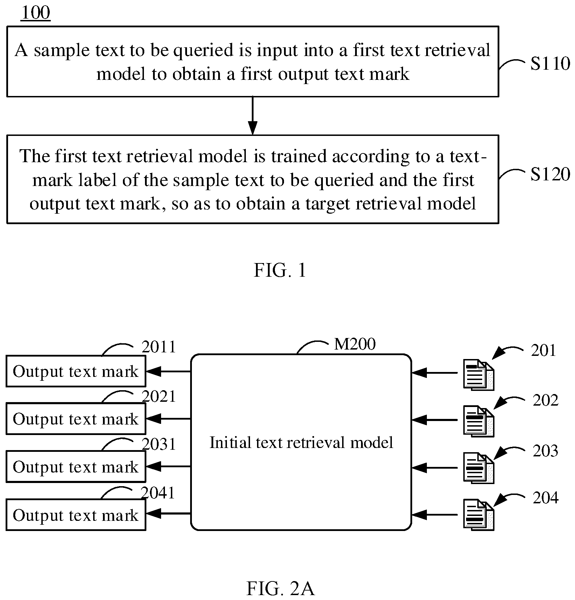

FIG. 1 shows a flowchart of a method of training a text retrieval model according to an embodiment of the present disclosure.

As shown in FIG. 1, a method 100 may include operation S 110 to operation S120.

In operation S 110, a sample text to be queried is input into a first text retrieval model to obtain a first output text mark.

In embodiments of the present disclosure, the sample text to be queried may be a complex question or a simple question. For example, the sample text to be queried may be "Is there a legal article in the country for a construction of an iron house in the west neighbor that blocks the sunlight on the bottom floor of the residential district?", and this sample text to be queried is a complex question.

In embodiments of the present disclosure, the first text retrieval model may be a generative artificial intelligence model.

In embodiments of the present disclosure, the first text retrieval model may be obtained by training an initial retrieval model using a plurality of reference texts and a plurality of reference text marks corresponding to the plurality of reference texts. For example, the reference text may be a legal article. The legal article for a first reference text among the plurality of reference texts may be "Article 293 of the *Civil Code of the People's Republic of China:* In the construction of a building, the relevant engineering construction standards of the state shall not be violated, and the ventilation, lighting and sunshine of the neighboring building shall not be interfered with". The reference text mark of the first reference text may be "55648".

In embodiments of the present disclosure, the plurality of reference text marks may be determined according to a reference text sequence. The reference text sequence may be determined according to semantics of the plurality of reference texts. For example, the reference text sequence may include a plurality of reference texts arranged in an order. The order may be determined according to the semantics of the reference texts. If two reference texts have a high similarity in terms of semantic, two corresponding reference text marks may have a small difference. The plurality of reference texts may include both existing legal articles and repealed legal articles. A second reference text among the plurality of reference texts may be a legal article "Article 89 of the *Property Law of the People's Republic of China:* [Provisions on Ventilation, Lighting and Sunshine] In the construction of a building, the relevant engineering construction standards of the state shall not be violated, and the ventilation, lighting and sunshine of the neighboring building shall not be interfered with". The reference text mark of the second reference text may be "55942".

In embodiments of the present disclosure, the first text retrieval model may output a reference text mark corresponding to the reference text. For example, if the first reference text is input into the first text retrieval model, the reference text mark "55648" may be obtained. If the second reference text is input into the first text retrieval model, the reference text mark "55942" may be obtained.

In embodiments of the present disclosure, the first output text mark may be a string similar to or consistent with the reference mark.

In operation S 120, the first text retrieval model is trained according to a text-mark label of the sample text to be queried and the first output text mark, so as to obtain a target retrieval model.

In embodiments of the present disclosure, the sample text to be queried may correspond to the first target reference text among the plurality of reference texts. For example, the sample text to be queried may correspond to the first reference text described above. The first reference text may be used as the first target reference text.

In embodiments of the present disclosure, the text-mark label may be a reference text mark of the first target reference text. For example, the text-mark label of the sample text to be queried may be the reference text mark "55648".

In embodiments of the present disclosure, a difference between the text-mark label and the first output text mark may be determined using various loss functions. The first text retrieval model may be trained according to the difference.

Through embodiments of the present disclosure, the reference text mark is determined according to a reference text sequence highly related to semantics, which may help the model to efficiently understand a corresponding training task. The first text retrieval model is trained using the reference text and the corresponding text mark, so that a model parameter of the first text retrieval model is highly associated with the reference text, and the first text retrieval model has an ability to retrieve the target reference text from the plurality of reference texts, which may effectively avoid a generated text being different from a real reference text caused by a direct text generation of the text retrieval model, and fully improve a professionalism of the text retrieval model. In addition, the training of the first text retrieval model using the sample text to be queried and the corresponding text-mark label may achieve a sufficient interaction between the sample text to be queried and the model parameter associated with the reference text, which may help the model to understand a complex question, facilitate the model to accurately determine a relationship between the complex question and articles, and reduce a computational complexity.

It may be understood that the training method in the present disclosure is described above. The reference text mark in the present disclosure will be further described below.

In some embodiments, the plurality of reference texts are from N sets of reference texts. A set of reference texts may include at least one reference text, and N may be an integer greater than 1. For example, if the reference text is a legal article, the whole text of the law to which the legal article belongs may be used as a set of reference texts. The *Civil Code* - *Real Right* may be used as a set of reference texts, and each legal article in the *Civil Code* - *Real Right* may be used as a reference text.

In some embodiments, the reference text sequences is determined according to the semantics of the plurality of reference texts through the following operations. Clustering is performed on the N sets of reference texts separately to adjust an order of the reference texts in the N sets of reference texts, so as to obtain N processed text sets. For example, the whole texts of the laws corresponding to the N sets of reference texts may include the *Civil Code - Real Right*, the *Civil Code* - *Contract*, and the *Education Law.* The legal articles in the *Civil Code* - *Contract* are mostly related to contracts. The legal articles in the *Education Law* are mostly related to education. Accordingly, most reference texts in a same set of reference texts have similar semantic relationships. Clustering may be performed on one or more sets of reference texts separately based on the semantics of the reference texts in the sets of reference texts, and one or more clusters may be formed in each clustered set of reference texts to adjust the order of the reference texts in these sets of reference texts, so as to obtain one or more processed text sets.

In some embodiments, the reference text sequence is determined according to the semantics of the plurality of reference texts through the following operations. A fusion text set is obtained according to the N processed text sets. For example, if clustering is performed on the N sets of reference texts, the obtained N processed text sets may be used as N sub-sets of the fusion text set. Each sub-set may include all reference texts in a processed text set.

In some embodiments, the reference text sequence is determined according to the semantics of the plurality of reference texts through the following operations. Clustering is performed on the fusion text set according to the respective semantics of the plurality of reference texts to adjust an order of a plurality of reference texts in the fusion text set, so as to obtain the reference text sequence. For example, different legal articles from different laws may have similar semantic relationships. By performing clustering on the fusion text set according to the respective semantics of the plurality of reference texts in the fusion text set, it is possible to re-adjust the order of the plurality of reference texts to obtain the reference text sequence, so that different legal articles with close or similar semantics in different laws may have a close distance. Next, it is possible to determine marks of the plurality of reference texts sequentially according to the order of the plurality of reference texts in the reference text sequence.

It may be understood that, in other embodiments, it is also possible to mark all the reference texts in the N sets of reference texts with random integers. That is, the mark of each reference text may be a random integer. However, a generative artificial intelligence model adopts an output method of generating tokens one by one. If the reference text is marked with a random integer, the generative artificial intelligence model may be difficult to learn a complex relationship between the plurality of reference texts.

Through embodiments of the present disclosure, clustering is performed on each of the N sets of reference texts to make full use of the semantic relationships between the reference texts in that text set. Clustering may be further performed on the plurality of processed text sets obtained by clustering to make full use of the semantic relationships between the reference texts in different text sets to sort the plurality of reference texts in an order related to the semantics, so that different reference texts with high semantic similarity may have the same or similar prefix of reference text mark, and the model may fully and efficiently utilize the semantic relationship between different reference texts.

It may be understood that the reference text and the reference text mark of the present disclosure are described above. The first text retrieval model of the present disclosure will be further described below.

In some embodiments, the first text retrieval model may be a large language model. For example, the large language model may be ERNIE Bot model, Chat Generative Pre-trained Transformer (ChatGPT) model, or other large language models.

In embodiments of the present disclosure, the first text retrieval model is obtained by training an initial text retrieval model. The initial text retrieval model may be a pre-trained model that has been trained using a large amount of text data, which has a strong semantic understanding ability. A method of training the initial text retrieval model will be described below with reference to FIG. 2A.

FIG. 2A shows a schematic diagram of training an initial text retrieval model according to an embodiment of the present disclosure.

In some embodiments, the first text retrieval model may be obtained by training the initial text retrieval model using the plurality of reference texts and the plurality of corresponding reference text marks through the following operations. A reference text is input into the initial text retrieval model to obtain a second output text mark of the reference text. As shown in FIG. 2A, a reference text 201, a reference text 202, a reference text 203 and a reference text 204 are input into an initial text retrieval model M200, so as to obtain an output text mark 2011 of the reference text 201, an output text mark 2021 of the reference text 202, an output text mark 2031 of the reference text 203, and an output text mark 2041 of the reference text 204, respectively. It may be understood that, each of the output text mark 2011, the output text mark 2021, the output text mark 2031 and the output text mark 2041 may be used as the second output text mark.

In some embodiments, the first text retrieval model may also be obtained by training the initial text retrieval model using the plurality of reference texts and the plurality of corresponding reference text marks through the following operations. A full fine-tuning is performed on the initial text retrieval model according to the second output text mark and a reference text mark. For example, the reference text 201 may be the first reference text described above. The reference text mark of the reference text 201 may be "55648". For another example, the reference text 202 may be the second reference text described above. The reference text mark of the reference text 202 may be "55942".

In embodiments of the present disclosure, performing the full fine-tuning on the initial text retrieval model according to the second output text mark and the reference text mark may include: determining a cross-entropy loss according to the second output text mark and the reference text mark; and performing the full fine-tuning on the initial text retrieval model according to the cross-entropy loss. For example, the initial text retrieval model may output a plurality of strings and a plurality of corresponding probabilities. A string corresponding to a highest probability is used as the second output text mark. A training objective of the model may be a maximization of a target likelihood. That is, a model parameter may be adjusted so that the string consistent with the reference text mark corresponds to a maximum probability. It is possible to determine a cross-entropy loss between the second output text mark and the reference text mark by using a cross-entropy loss function, and perform a full fine-tuning on the initial text retrieval model according to the cross-entropy loss corresponding to the reference text, so as to obtain the first text retrieval model. For another example, it is possible to determine a cross-entropy loss between the output text mark 2011 of the reference text 201 and the reference text mark "55648" to perform a full fine-tuning on the model. It is also possible to determine a cross-entropy loss between the output text mark 2021 of the reference text 202 and the reference text mark "55942" to further perform a full fine-tuning on the model.

Through embodiments of the present disclosure, the initial text retrieval model is trained using the reference text and the reference text mark, so that the trained first text retrieval model may output a text mark according to a text. A target reference text may be retrieved from the plurality of reference texts based on the output text mark, which may help improve the authority of the model and avoid a degradation of model accuracy caused by model "hallucination".

It may be understood that the method of training the initial text retrieval model in the present disclosure is described above. A method of training the first text retrieval model will be described below.

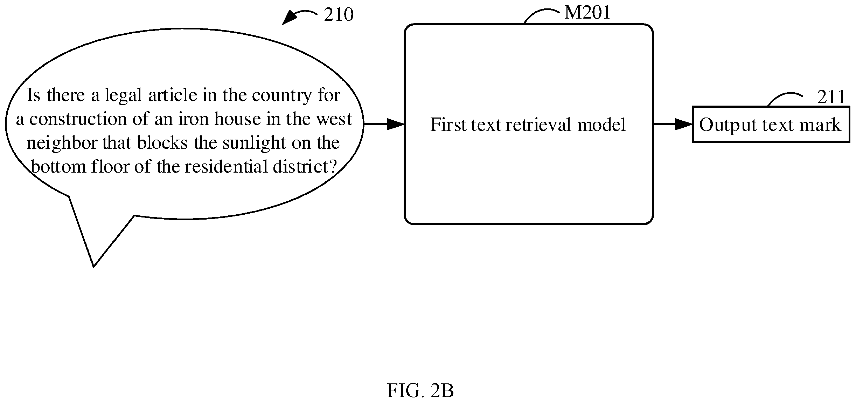

FIG. 2B shows a schematic diagram of training a first text retrieval model according to an embodiment of the present disclosure.

In some embodiments, a sample text to be queried may be input into the first text retrieval model to obtain a first output text mark. As shown in FIG. 2B, a sample text 210 to be queried may be the above-mentioned sample text to be queried "Is there a legal article in the country for a construction of an iron house in the west neighbor that blocks the sunlight on the bottom floor of the residential district?". The sample text 210 to be queried may be input into a first text retrieval model M201, and an output text mark 211 of the sample text 210 to be queried may be obtained. It may be understood that the output text mark 211 may be used as the first output text mark.

In embodiments of the present disclosure, the sample text to be queried may correspond to the first target reference text. For example, it is possible to obtain a plurality of pairs of training texts. Taking legal articles as an example, a pair of training texts may include a sample text to be queried and a corresponding legal article for answer. The corresponding legal article for answer may be used as the first target reference text. The reference text mark of the corresponding legal article for answer may be used as a text-mark label of the sample text to be queried. The sample text 210 to be queried may correspond to the reference text 201. The reference text 201 may be used as the first target reference text corresponding to the sample text 210 to be queried. The reference text mark "55648" of the reference text 201 may be used as the text-mark label of the sample text 210 to be queried.

In some embodiments, the first text retrieval model may be trained according to the text-mark label of the sample text to be queried and the first output text mark.

In embodiments of the present disclosure, training the first text retrieval model may include performing a full fine-tuning on the first text retrieval model. For example, a loss value may be determined using various loss functions (such as the cross-entropy loss function described above) according to the text-mark label "55648" of the sample text 210 to be queried and the output text mark 211 of the sample text 210 to be queried. A full fine-tuning may be performed on the first text retrieval model using the loss value. It may be understood that a second text retrieval model may be obtained after the first text retrieval model is trained using all the sample texts to be queried and a part of the corresponding text-mark labels. After the model is trained using all the sample texts to be queried and the corresponding text-mark labels, the obtained model may be used as the target text retrieval model.

Through embodiments of the present disclosure, after training the model using the plurality of reference texts and the plurality of reference text labels, the model may be further trained using the sample text to be queried and the corresponding text-mark label, which may effectively improve a performance of the model in handling a complex question and help the model to accurately output a text mark corresponding to the question.

It may be understood that the present disclosure is described above with an example that the sample text to be queried corresponds to a first target reference text. However, the present disclosure is not limited to this, and the sample text to be queried may also correspond to a plurality of first target reference texts, which will be described below.

In some embodiments, the reference text mark may include a first reference text sub-mark and a second reference text sub-mark. For example, the reference text mark "55648" may include a first reference text sub-mark "55" and a second reference text sub-mark "648". The reference text mark "55942" may include a first reference text sub-mark "55" and a second reference text sub-mark "942". It may be understood that the first reference text sub-mark may be a prefix of the reference text mark described above.

In some embodiments, the plurality of first target reference texts corresponding to the sample text to be queried have the same first reference text sub-mark. For example, the reference text mark "55648" and the reference text mark "55942" have the same first reference text sub-mark "55".

It may be understood that the present disclosure is described above with an example that the reference text is a legal article. However, the present disclosure is not limited to this, and a description will be given below.

In some embodiments, the reference text may be a rule text. The rule text may include a legal article, an article of a policy file, an article of a standard file, or articles of other files formulated by authoritative institutions.

It may be understood that the method of training the text retrieval model in the present disclosure is described above. A method of retrieving a text of the present disclosure will be described below.

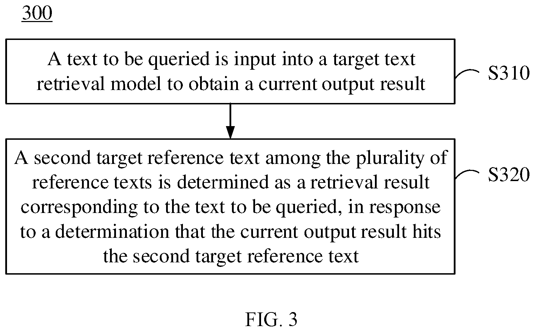

FIG. 3 shows a flowchart of a method of retrieving a text according to another embodiment of the present disclosure.

As shown in FIG. 3, a method 300 may include operation S310 to operation S320.

In operation S310, a text to be queried is input into a target text retrieval model to obtain a current output result.

In embodiments of the present disclosure, the text to be queried may be a question input by a user.

In embodiments of the present disclosure, the target text retrieval model is obtained by training the first text retrieval model using the sample text to be queried and the text-mark label. The first text retrieval model may be a generative artificial intelligence model. The sample text to be queried may be a complex question or a simple question.

In embodiments of the present disclosure, the sample text to be queried corresponds to a first target reference text among a plurality of reference texts, and the text-mark label is a reference text mark of the first target reference text. The reference text mark may be a string.

In embodiments of the present disclosure, the current output result may be a string.

In operation S320, a second target reference text among the plurality of reference texts is determined as a retrieval result corresponding to the text to be queried, in response to a determination that the current output result hits the second target reference text.

In embodiments of the present disclosure, a retrieval may be performed in the plurality of reference texts according to the current output result, so as to determine whether the current output result hits the second target reference text. If the current output result hits one of the plurality of reference texts, the hit reference text may be used as the second target reference text. The second target reference text may be returned to the user as a retrieval result.

Through embodiments of the present disclosure, the target retrieval model is trained using the sample text to be queried and the corresponding text-mark label, so that an accuracy of the retrieval result for a complex question may be effectively improved. Furthermore, determining a retrieval result using the target text retrieval model may consume few resources and reduce costs of non-professionals in accurately querying a text in a professional field.

It may be understood that the target text retrieval model involved in the above-mentioned method 300 may be obtained by training the first text retrieval model using the method 100. The above detailed descriptions of the first text retrieval model, the reference text, the reference text mark and the sample text to be queried are also applicable to the first text retrieval model, the reference text, the reference text mark and the sample text to be queried in the method 300, which will not be repeated here.

The method of retrieving the text of the present disclosure is described above and will be further described below.

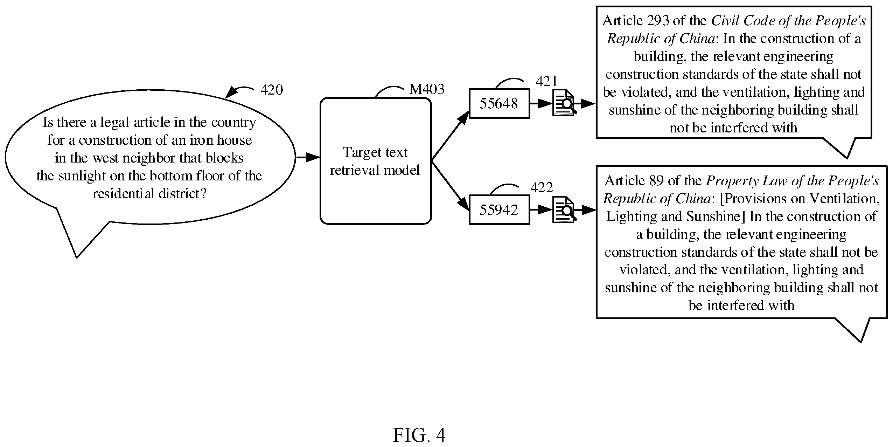

FIG. 4 shows a schematic diagram of a method of retrieving a text according to an embodiment of the present disclosure.

In embodiments of the present disclosure, inputting the text to be queried into the target text retrieval model to obtain the current output result may include: inputting the text to be queried into an encoder of the target text retrieval model to obtain an encoding result; and inputting the encoding result into a decoder of the target text retrieval model to perform a beam search decoding on the encoding result to obtain a plurality of current output results. As shown in FIG. 4, an encoder of a target text retrieval model M403 may encode a text 420 to be queried to obtain an encoding result. Next, a decoder of the target text retrieval model M403 may perform a beam search decoding on the encoding result to obtain a current output result 421 and a current output result 422. If the sample text 210 to be queried is used as the text 420 to be queried, the current output result 421 may be "55648", and the current output result 422 may be "55942". Through embodiments of the present disclosure, a beam search decoding is performed on the encoding result, so that the model may have an ability to output multiple results to comprehensively retrieve reference texts highly related to the text to be queried.

In embodiments of the present disclosure, the current output result may be an integer string. For example, the output result of the target text retrieval model may be configured to reduce a likelihood probability of non-integer strings and maximize a probability of integer strings.

In embodiments of the present disclosure, it is possible to retrieve from the plurality of reference texts according to the current output result. For example, it is possible to retrieve from the plurality of reference texts based on the current output result 421 and the current output result 422. It may be determined that the current output result 421 hits the first reference text described above, and it may also be determined that the current output result 422 hits the second reference text described above. In this case, the first reference text and the second reference text may be used as the retrieval result for the text 420 to be queried.

It may be understood that the present disclosure is described above with an example of performing a beam search decoding on the encoding result. However, the present disclosure is not limited to this, and the encoding result may also be decoded using other decoding methods.

It may be understood that the present disclosure is described above with an example that the current output result hits one or more reference texts. An example that the current output result hits no reference text will be described below.

In some embodiments, the target text retrieval model may be a large language model. For example, in the encoding process and/or the decoding process, the large language model may introduce some randomness.

In some embodiments, the method 300 may further include: repeatedly performing the operation of inputting the text to be queried into the target text retrieval model until a subsequent output result of the current output result hits the second target reference text among the plurality of reference texts, in response to a determination that the current output result hits none of the plurality of reference texts. For example, if the current output result of a text to be queried hits none of the plurality of reference texts, the text to be queried may be reinput into the target text retrieval model to obtain a subsequent output result of the current output result. Next, it is determined whether the subsequent output result hits one or more of the plurality of reference texts. The operation may be repeatedly performed once or multiple times. If a subsequent output result hits the second target reference text among the plurality of reference texts, the second target reference text is used as the retrieval result for the text to be queried. Through embodiments of the present disclosure, in a case that the output result hits no reference text, a re-inference is performed using the model, which may further improve a robustness of the model.

It may be understood that the methods of the present disclosure have been described above. Apparatuses of the present disclosure will be described below.

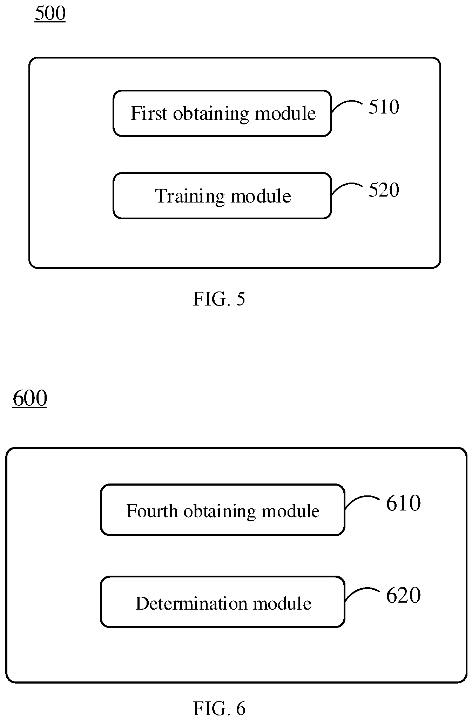

FIG. 5 shows a block diagram of an apparatus of training a text retrieval model according to an embodiment of the present disclosure.

As shown in FIG. 5, an apparatus 500 may include a first obtaining module 510 and a training module 520.

The first obtaining module 510 may be used to input a sample text to be queried into a first text retrieval model to obtain a first output text mark.

The training module 520 may be used to train the first text retrieval model according to a text-mark label of the sample text to be queried and the first output text mark to obtain a target text retrieval model.

In embodiments of the present disclosure, the sample text to be queried corresponds to a first target reference text among a plurality of reference texts, the text-mark label is a reference text mark of the first target reference text, a plurality of reference text marks are determined according to a reference text sequence, and the reference text sequence is determined according to semantics of the plurality of reference texts.

In embodiments of the present disclosure, the first text retrieval model is obtained by training an initial text retrieval model using the plurality of reference texts and the plurality of reference text marks corresponding to the plurality of reference texts, so as to output a reference text mark corresponding to a reference text.

In some embodiments, the first text retrieval model is obtained by training the initial text retrieval model using the plurality of reference texts and the plurality of reference text marks corresponding to the plurality of reference texts through: a second obtaining module used to input the reference text into the initial text retrieval model to obtain a second output text mark of the reference text; and a first fine-tuning module used to perform a full fine-tuning on the initial text retrieval model according to the second output text mark and the reference text mark, so as to obtain the first text retrieval model.

In some embodiments, the first fine-tuning module includes: a first determination sub-module used to determine a cross-entropy loss according to the second output text mark and the reference text mark; and a first fine-tuning sub-module used to perform the full fine-tuning on the initial text retrieval model according to the cross-entropy loss.

In some embodiments, the plurality of reference texts are from N sets of reference texts, each of the N sets of reference texts includes one or more reference texts, and N is an integer greater than 1. The reference text sequence is determined according to the semantics of the plurality of reference texts through: a first clustering module used to performing clustering on the N sets of reference texts separately to adjust an order of the one or more reference texts in each of the N sets of reference texts, so as to obtain N processed text sets; a third obtaining module used to obtain a fusion text set according to the N processed text sets; and a second clustering module used to perform clustering on the fusion text set according to respective semantics of the plurality of reference texts to adjust an order of the plurality of reference texts in the fusion text set, so as to obtain the reference text sequence.

In some embodiments, the sample text to be queried corresponds to a plurality of first target reference texts, the reference text mark includes a first reference text sub-mark and a second reference text sub-mark, and the plurality of first target reference texts have a same first reference text sub-mark.

In some embodiments, the training module includes: a second fine-tuning sub-module used to perform a full fine-tuning on the first text retrieval model.

In some embodiments, the reference text is a rule text, and the first text retrieval model is a large language model.

It may be understood that the training apparatus in the present disclosure is described above. An apparatus of retrieving a text of the present disclosure will be described below.

FIG. 6 shows a block diagram of an apparatus of retrieving a text according to another embodiment of the present disclosure.

As shown in FIG. 6, an apparatus 600 may include a fourth obtaining module 610 and a determination module 620.

The fourth obtaining module 610 may be used to input a text to be queried into a target text retrieval model to obtain a current output result.

The determination module 620 may be used to determine a second target reference text among the plurality of reference texts as a retrieval result corresponding to the text to be queried, in response to a determination that the current output result hits the second target reference text.

In embodiments of the present disclosure, the target text retrieval model is obtained by training a first text retrieval model using a sample text to be queried and a text-mark label, the sample text to be queried corresponds to a first target reference text among the plurality of reference texts, and the text-mark label is a reference text mark of the first target reference text.

In embodiments of the present disclosure, the target text retrieval model may be trained using, for example, the apparatus 500.

In embodiments of the present disclosure, the target text retrieval model is a large language model, and the apparatus further includes: a performing module used to repeatedly perform the operation of inputting the text to be queried into the target text retrieval model until a subsequent output result of the current output result hits the second target reference text among the plurality of reference texts, in response to a determination that the current output result hits none of the plurality of reference texts.

The above methods and the apparatuses in the present disclosure may be applied in application scenarios such as generative search, intelligent document editing, intelligent assistants, virtual characters, etc.

In technical solutions of the present disclosure, a collection, a storage, a use, a processing, a transmission, a provision, a disclosure and other processing of user personal information involved comply with articles of relevant laws and regulations and do not violate public order and good custom.

According to embodiments of the present disclosure, the present disclosure further provides an electronic device, a readable storage medium, and a computer program product.

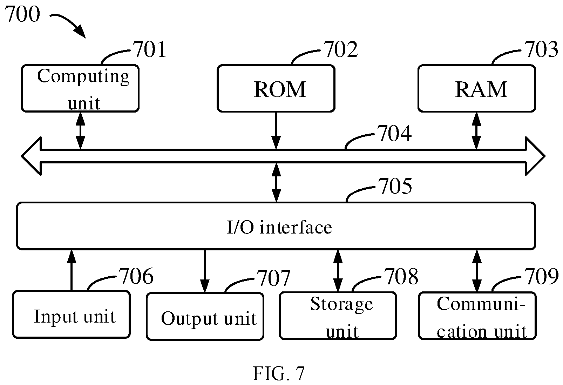

FIG. 7 shows a schematic block diagram of an example electronic device 700 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read-only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing unit 701 include, but are not limited to, a central processing unit (CPU), a graph processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and processes described above, such as the method of training the text retrieval model and/or the method of retrieving the text. For example, in some embodiments, the method of training the text retrieval model and/or the method of retrieving the text may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the method of training the text retrieval model and/or the method of retrieving the text described above. Alternatively, in other embodiments, the computing unit 701 may be used to perform the method of training the text retrieval model and/or the method of retrieving the text by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read-only memory (EPROM or a flash memory), an optical fiber, a compact disk read-only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) display or LCD (liquid crystal display)) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (100) of training a text retrieval model, comprising:
inputting (S1 10) a sample text to be queried (S210) into a first text retrieval model (M201) to obtain a first output text mark (211); and
training (S120) the first text retrieval model (M201) according to a text-mark label of the sample text to be queried (210) and the first output text mark (211) to obtain a target text retrieval model (M403),
wherein the sample text to be queried (210) corresponds to a first target reference text among a plurality of reference texts, the text-mark label is a reference text mark of the first target reference text, a plurality of reference text marks are determined according to a reference text sequence, and the reference text sequence is determined according to semantics of the plurality of reference texts; and
wherein the first text retrieval model (M201) is obtained by training an initial text retrieval model (M200) using the plurality of reference texts and the plurality of reference text marks corresponding to the plurality of reference texts, so as to output a reference text mark corresponding to a reference text.

2. The method (100) according to claim 1, wherein the first text retrieval model (M201) is obtained by training the initial text retrieval model (M200) using the plurality of reference texts and the plurality of reference text marks corresponding to the plurality of reference texts by:
inputting the reference text into the initial text retrieval model (M200) to obtain a second output text mark of the reference text; and
performing a full fine-tuning on the initial text retrieval model (M200) according to the second output text mark and the reference text mark, so as to obtain the first text retrieval model (M201).

3. The method (100) according to claim 2, wherein the performing a full fine-tuning on the initial text retrieval model (M200) according to the second output text mark and the reference text mark comprises:
determining a cross-entropy loss according to the second output text mark and the reference text mark; and
performing the full fine-tuning on the initial text retrieval model (M200) according to the cross-entropy loss.

4. The method (100) according to claim 1, wherein the plurality of reference texts are from N sets of reference texts, each of the N sets of reference texts comprises one or more reference texts, and N is an integer greater than 1, and
wherein the reference text sequence is determined according to the semantics of the plurality of reference texts by:
performing clustering on the N sets of reference texts separately to adjust an order of the one or more reference texts in each of the N sets of reference texts, so as to obtain N processed text sets;
obtaining a fusion text set according to the N processed text sets; and
performing clustering on the fusion text set according to respective semantics of the plurality of reference texts to adjust an order of the plurality of reference texts in the fusion text set, so as to obtain the reference text sequence.

5. The method (100) according to claim 1, wherein the sample text to be queried (210) corresponds to a plurality of first target reference texts, the reference text mark comprises a first reference text sub-mark and a second reference text sub-mark, and the plurality of first target reference texts have a same first reference text sub-mark.

6. The method (100) according to claim 1, wherein the training the first text retrieval model (M201) comprises:
performing a full fine-tuning on the first text retrieval model (M201).

7. The method (100) according to claim 1, wherein the reference text is a rule text, and the first text retrieval model (M201) is a large language model.

8. A method (300) of retrieving a text, comprising:
inputting (310) a text to be queried into a target text retrieval model (M403) to obtain a current output result, wherein the target text retrieval model (M403) is obtained by training a first text retrieval model (M201) using a sample text to be queried (210) and a text-mark label, the sample text to be queried (210) corresponds to a first target reference text among a plurality of reference texts, and the text-mark label is a reference text mark of the first target reference text; and
determining (S320) a second target reference text among the plurality of reference texts as a retrieval result corresponding to the text to be queried, in response to a determination that the current output result hits the second target reference text.

9. The method (300) according to claim 8, wherein the target text retrieval model (M403) is a large language model, and the method further comprises:
repeatedly inputting the text to be queried into the target text retrieval model (M403) until a subsequent output result of the current output result hits the second target reference text among the plurality of reference texts, in response to a determination that the current output result hits none of the plurality of reference texts.

10. An apparatus (500) of training a text retrieval model, comprising:
a first obtaining module (510) configured to input a sample text to be queried into a first text retrieval model to obtain a first output text mark; and
a training module (520) configured to train the first text retrieval model according to a text-mark label of the sample text to be queried and the first output text mark to obtain a target text retrieval model,
wherein the sample text to be queried corresponds to a first target reference text among a plurality of reference texts, the text-mark label is a reference text mark of the first target reference text, a plurality of reference text marks are determined according to a reference text sequence, and the reference text sequence is determined according to semantics of the plurality of reference texts; and
wherein the first text retrieval model is obtained by training an initial text retrieval model using the plurality of reference texts and the plurality of reference text marks corresponding to the plurality of reference texts, so as to output a reference text mark corresponding to a reference text.

11. The apparatus (500) according to claim 10, wherein the first text retrieval model is obtained by training the initial text retrieval model using the plurality of reference texts and the plurality of reference text marks corresponding to the plurality of reference texts through :
a second obtaining module configured to input the reference text into the initial text retrieval model to obtain a second output text mark of the reference text; and
a first fine-tuning module configured to perform a full fine-tuning on the initial text retrieval model according to the second output text mark and the reference text mark, so as to obtain the first text retrieval model; and optionally
wherein the first fine-tuning module comprises:
a first determination sub-module configured to determine a cross-entropy loss according to the second output text mark and the reference text mark; and
a first fine-tuning sub-module configured to perform the full fine-tuning on the initial text retrieval model according to the cross-entropy loss.

12. An apparatus (600) of retrieving a text, comprising:
a fourth obtaining module (610) configured to input a text to be queried into a target text retrieval model to obtain a current output result, wherein the target text retrieval model is obtained by training a first text retrieval model using a sample text to be queried and a text-mark label, the sample text to be queried corresponds to a first target reference text among a plurality of reference texts, and the text-mark label is a reference text mark of the first target reference text; and
a determination module (620) configured to determine a second target reference text among the plurality of reference texts as a retrieval result corresponding to the text to be queried, in response to a determination that the current output result hits the second target reference text.

13. An electronic device (700), comprising:
at least one processor; and
a memory communicatively connected to the at least one processor, wherein the memory stores instructions executable by the at least one processor, and the instructions, when executed by the at least one processor, are configured to cause the at least one processor to implement the method of any one of claims 1 to 9.

14. A non-transitory computer-readable storage medium having computer instructions therein, wherein the computer instructions are configured to cause a computer to implement the method of any one of claims 1 to 9.

15. A computer program product containing a computer program, wherein the computer program, when executed by a processor, is configured to cause the processor to implement the method of any one of claims 1 to 9.
